# EUROPÄISCHE PATENTSCHRIFT

(11) **EP 4 019 173 B1**
(45) Veröffentlichungstag und Bekanntmachung des Hinweises auf die Patenterteilung: **19.07.2023**
(21) Anmeldenummer: 21192346.1
(22) Anmeldetag: 20.08.2021
(51) Int. Cl.: B23B 27/00, B23B 29/04, B23B 31/11

(54) **BOHRSTANGENANORDNUNG**
BORING BAR ARRANGEMENT
AGENCEMENT DE BARRE D'ALESAGE

(30) Priorität: 22.12.2020 DE 102020134531
(43) Veröffentlichungstag der Anmeldung: 29.06.2022
(73) Patentinhaber: Kimmich, Hubert, 78713 Schramberg (DE)
(72) Erfinder: Kimmich, Hubert, 78713 Schramberg (DE)
(74) Vertreter: Cohausz Hannig Borkowski Wißgott

(56) Entgegenhaltungen:
- WO-A1-2020/011394
- DE-A1- 4 340 911
- DE-U1- 20 010 789
- US-A- 4 998 851

## Beschreibung

Die Erfindung betrifft eine Bohrstangenanordnung mit einer Bohrstange/einem Bohrstangenkopf und einer Befestigungsvorrichtung zum Befestigen der Bohrstange /des Bohrstangenkopfes an einer spanabhebenden Maschine mit einer im Maschinenfutter befestigbaren zylindrischen Reduzierhülse oder andere Werkzeugaufnahme, an deren vorderem, dem Maschinenfutter abgewandten Ende ein Hohlprofil vorsteht, das die Bohrstange/den Bohrstangenkopf trägt, wobei ein Endbereich der Bohrstange/des Bohrstangenkopfes ein Schneidwerkzeug trägt, wobei die zwischen dem Hohlprofilinnenraum und der Hohlprofilaußenwand befindliche Wand des die Bohrstange /den Bohrstangenkopf stabilisierenden Hohlprofils in dem Vorrichtungsseitenbereich, an dem das Schneidwerkzeug an der Bohrstange/dem Bohrstangenkopf vorsteht, eine geringere Dicke aufweist als die Dicke der übrigen Wand des Hohlprofils, und wobei die Längsachse des Hohlprofils achsparallel und in einem Abstand zur gemeinsamen Achse der Reduzierhülse oder der anderen Werkzeugaufnahme und der Bohrstange/des Bohrstangenkopfes liegt.

Eine solche Bohrstangenanordnung ist aus der WO 2020/011394 A1 bekannt.

Bei dieser bekannten Konstruktion durchdringt die Bohrstange sowohl den Werkzeughalter/die Reduzierhülse als auch die Bohrstange stützende Hohlprofil und tritt an der Vorderseite des Hohlprofils aus, um am vorderen Ende das Schneidwerkzeug zu tragen. Zwischen der Werkzeugschneide und dem die Bohrstange stabilisierenden Hohlprofil besteht ein Freiabstand, so dass das Hohlprofil kollisionsfrei dem Schneidwerkzeug in die Bohrung folgen kann, bei hoher Eindringtiefe. Durch die Erhöhung der Stabilität der Bohrstange können durch die verringerten Vibrationen größere Zustellungen, Vorschübe und Schnittgeschwindigkeiten erzielt werden, wodurch sich die Bearbeitungszeit entsprechend verkürzt.

Aufgabe der Erfindung ist es, eine Bohrstangenanordnung der eingangs genannten Art so zu verbessern, dass eine noch höhere Eindringtiefe erreichbar ist, bei hoher Schneidgenauigkeit, hoher Stabilität und geringen Vibrationen.

Diese Aufgabe wird erfindungsgemäß durch die Bohrstangenanordnung gemäß Anspruch 1 gelöst wobei:
- die Bohrstange/der Bohrstangenkopf mit ihrem/seinem hinteren, dem Schneidwerkzeug abgewandten Ende an dem vorderen Ende des Hohlprofils als Wechselkopf lösbar befestigt ist, und
- die Reduzierhülse oder die andere Werkzeugaufnahme und das Hohlprofil über deren gesamte Länge von einer Spannschraube koaxial durchdrungen sind, deren vorderes Ende mit einem Außengewinde in einer Gewindebohrung der Bohrstange/des Bohrstangenkopfes einliegt.

Die Bohrstange verläuft nicht mehr über die gesamte Länge durch das einen Bohrstangenstabilisator bildende Hohlprofil hindurch, sondern ist mit ihrer kurzen Länge nur noch am vorderen Ende des Hohlprofils als Wechselkopf befestigt. Ein sicherer Halt der kurzen Bohrstange am Hohlprofil wird durch die Spannschraube erreicht, die statt der Bohrstange durch das Hohlprofil und den Werkzeughalter (Reduzierhülse) verläuft. Eine solche Konstruktion führt zu noch besseren Schneidergebnissen aufgrund der hohen Stabilität und geringen Vibrationen bei hoher Eindringtiefe. Ein Auswechseln der Bohrstange als Wechselkopf ist schnell und einfach möglich.

Die erfindungsgemäße Konstruktion macht hierbei weiterhin von den aus der WO 2020/011394 A1 bekannten Vorteilen Gebrauch, die dadurch entstehen, dass das Hohlprofil als Stabilisator für die Bohrstange nicht gleichachsig zu den Achsen des Werkzeughalters und der Bohrstange angeordnet ist, sondern achsparallel verschoben ist, so dass in enge und tiefe Bohrungen eingedrungen werden kann.

Vorteilhafte Ausgestaltungen der Erfindung sind in den Unteransprüchen aufgeführt.

Zwei Ausführungsbeispiele der Erfindung sind in den Zeichnungen dargestellt und werden im Folgenden näher beschrieben. Es zeigen
- Fig. 1: eine perspektivische Ansicht der Bohrstangenanordnung mit noch nicht befestigter Bohrstange/Bohrstangenkopf und einteiliger Reduzierhülse,
- Fig. 2: eine perspektivische Ansicht der Bohrstangenanordnung mit noch nicht befestigter Bohrstange /Bohrstangenkopf und einteiliger Werkzeugaufnahme HSK-A63 mit integriertem Hohlprofil,

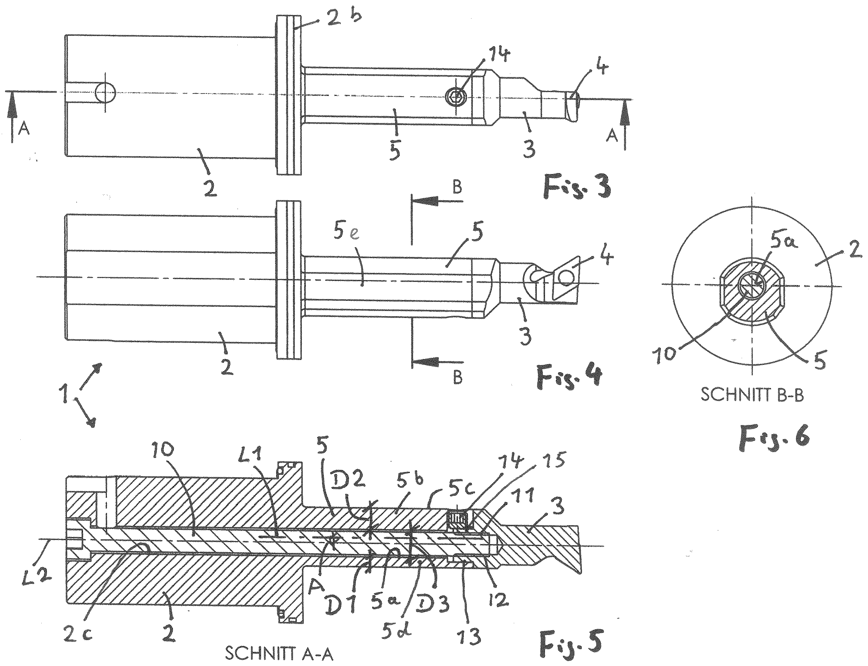

- Fig. 3: eine erste Seitenansicht der Bohrstangenanordnung, (Bohrstangenkopf)
- Fig. 4: eine zweite Seitenansicht der Bohrstangenanordnung, (Bohrstangenkopf)
- Fig. 5: einen axialen Längsschnitt durch die Bohrstangenanordnung nach A-A in Fig. 3,
- Fig. 6: einen Querschnitt durch die Bohrstangenanordnung nach B-B in Fig. 4.

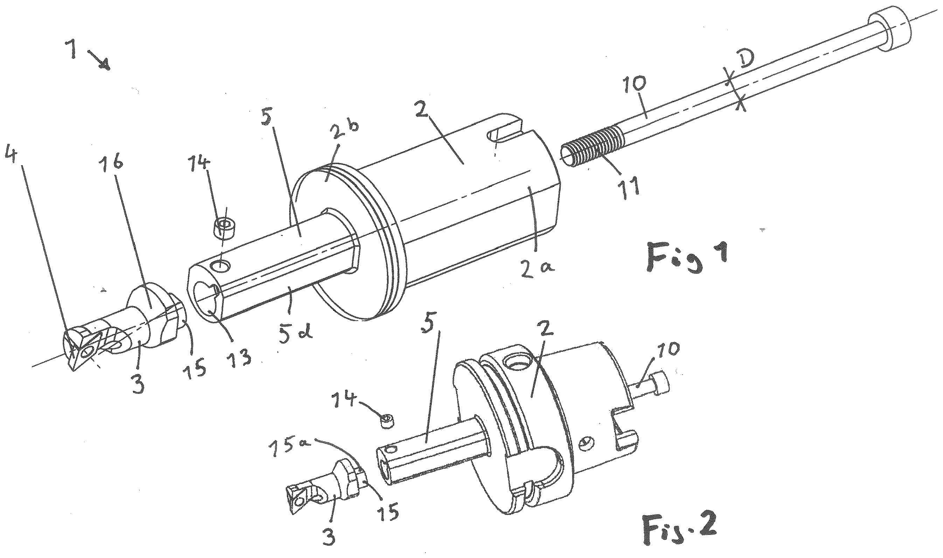

Die erfindungsgemäße Vorrichtung 1 zum Befestigen einer Bohrstange (Bohrstangenkopf) 3 an einer spanabhebenden Maschine (Maschine nicht dargestellt) weist eine Reduzierhülse (Spannhülse) 2 oder eine andere Werkzeugaufnahme (Schnittstelle zur Maschine) wie z.B. SK, BT, CAPTO, HSK (siehe auch Fig. 2) Position 2 auf, die Variante Fig.1 als Reduzierhülse weist einen zylindrischen Außenmantel 2a auf, mit dem sie als Werkzeughalter in einer zylindrischen Ausnehmung des Maschinenfutters befestigbar ist. Am äußeren Ende weist die Reduzierhülse 2 einen optionalen Flansch 2b auf. Ferner weist die Reduzierhülse 2 eine innere Längsausnehmung 2c auf, in der eine Spannschraube 10 einliegt, wobei die Längsausnehmung 2c der Reduzierhülse 2 zylindrisch ist und einen bis zu 2 mm größeren fÖ besitzen kann als der ØD der Spannschraube, wodurch das Kühlmittel seitlich (Fläche vom Kreisring) zwischen 2c und ØD zum Bohrkopf 3 durchströmen kann. Damit besitzen die Reduzierhülse (Spannhülse) 2, die Spannschraube 10 und die Längsausnehmung 5a des weiter unten beschriebenen Hohlprofils 5 die gleiche Längsachse L2.

Am vorderen Ende der Reduzierhülse 2 ist ein Hohlprofil 5 als Bohrstangenstabilisator angeformt, das eine zylindrische Längsausnehmung 5a aufweist, in der die Spannschraube 10 einliegt, so dass die Längsausnehmung 5a mit der Längsausnehmung 2c der Reduzierhülse fluchtet und dieselbe Längsachse L2 besitzt.

Am vorderen Ende des Hohlprofils 5 ist eine Bohrstange/Bohrstangenkopf 3 geringer Länge achsparallel, lösbar befestigt. Hierzu weist das rückseitige Ende der Bohrstange 3 einen ringförmigen, zylindrischen und abgeflachten Vorsprung 15 auf, der in einer Bohrung des vorderen Endes des Hohlprofils 5 einliegt.

Die Spannschraube 10 durchquert koaxial die Reduzierhülse /Werkzeugaufnahme 2 und achsparallel das Hohlprofil 5 und weist an ihrem vorderen Ende ein Außengewinde 11 auf, mit dem sie in einer Gewindebohrung 12 am rückseitigen Ende der kurzen Bohrstange 3 einliegt.

Das die Bohrstange 3 stabilisierende Hohlprofil 5 überdeckt mit seiner gesamten Länge die Spannschraube 10, wobei auf der Seite bzw. dem Bereich der Vorrichtung, an der/dem das Schneidwerkzeug 4 an der Bohrstange vorsteht, die überdeckende Wand 5d des Hohlprofils eine geringere Dicke D1 aufweist als die Dicke D2 der Hohlprofilwand 5b in den übrigen Seiten/Bereichen. Hierdurch liegt die Längsachse L1 des Hohlprofils 5 parallel und in einem Abstand A zur Längsachse L2 der zylindrischen Längsausnehmung 5a des Hohlprofils 5.

Dadurch entsteht zwischen der Werkzeugschneide und der Außenwand des Hohlprofils 5 ein Freiabstand. Das ermöglicht dem Hohlprofil als Bohrstangenstabilisator, der Werkzeugschneide in die Bohrung folgen zu können, ohne mit dem Werkstück zu kollidieren.

Die als Wechselkopf ausgebildete kurze Bohrstange 3 ist nicht nur durch die Spannschraube 10 am Hohlprofil (Bohrstangenstabilisator) alleine gehalten, sondern es besteht auch noch eine Fixierschraube 14, die im Hohlprofil 5 gelagert ist, und die Bohrstange 3 insbesondere die zylindrische Wand 15 durch die Abflachung 15a am Hohlprofil 5 festklemmt, welche auch die Ausrichtung /Positionierung der Positionen 3 zu 5 übernimmt.

Die zylindrische Längsausnehmung 5a des Hohlprofils 5 weist einen Innendurchmesser D3 auf, der gleich oder größer ist als der Durchmesser der Spannschraube 10.

Die Gewindebohrung 12 der Bohrstange 3 ist von einer zylindrischen und auch abgeflachten Wand 15 und 15a umgeben, die in einer Bohrung 13 des vorderen Endes des Hohlprofils 5 insbesondere formschlüssig einliegt.

Die Achse der zylindrischen Wand 15 und die Achse der Bohrstange/des Bohrstangenkopfes 3 sind gleichachsig oder bilden zueinander parallel miteinander einen Abstand. Ferner können die Achse der Bohrstange/des Bohrstangenkopfes 3 und die Achse der Reduzierhülse/Werkzeugaufnahme 2 zueinander parallel miteinander einen Abstand bilden. Hierdurch vergrößert sich auch der Freiabstand, so dass das Hohlprofil kollisionsfrei dem Schneidwerkzeug in die Bohrung folgen kann, bei hoher Eindringtiefe.

Die Außenwand 5c des stabilisierenden Hohlprofils 5 ist zylindrisch mit einem kreisförmigen oder ovalen Querschnitt. Hierbei kann die Außenwand 5c des stabilisierenden Hohlprofils 5 einen Querschnitt mit Abflachungen 5e aufweisen.

Die Hohlprofilwand 5b weist im Bereich ihrer geringsten Dicke D1 ½ bis 1/30 der Dicke auf, die die Hohlprofilwand im Bereich ihrer größten Dicke D2 aufweist.

Das stabilisierende Hohlprofil 5 ist an der vorderen Stirnseite der Reduzierhülse Werkzeugaufnahme 2 angeformt. Alternativ liegt das stabilisierende Hohlprofil 5 in einer Längsausnehmung der Reduzierhülse/Werkzeugaufnahme 2 insbesondere längsverstellbar ein und ist dort fixiert.

## Patentansprüche

1. Bohrstangenanordnung mit einer Bohrstange/einem Bohrstangenkopf (3) und einer Befestigungsvorrichtung (1) zum Befestigen der Bohrstange /des Bohrstangenkopfes (3) an einer spanabhebenden Maschine mit einer im Maschinenfutter befestigbaren zylindrischen Reduzierhülse (2) oder andere Werkzeugaufnahme, an deren vorderem, dem Maschinenfutter abgewandten Ende ein Hohlprofil (5) vorsteht, das die Bohrstange/den Bohrstangenkopf (3) trägt,
- wobei ein Endbereich der Bohrstange/des Bohrstangenkopfes (3) ein Schneidwerkzeug (4) trägt,
- wobei die zwischen dem Hohlprofilinnenraum (5a) und der Hohlprofilaußenwand befindliche Wand (5b) des die Bohrstange /den Bohrstangenkopf (3) stabilisierenden Hohlprofils (5) in dem Vorrichtungsseitenbereich, an dem das Schneidwerkzeug (4) an der Bohrstange/dem Bohrstangenkopf (3) vorsteht, eine geringere Dicke (D1) aufweist als die Dicke (D2) der übrigen Wand (5b) des Hohlprofils (5), und
- wobei die Längsachse (L1) des Hohlprofils (5) achsparallel und in einem Abstand (A) zur Achse (L2) der Reduzierhülse (2) oder der anderen Werkzeugaufnahme und der Bohrstange/des Bohrstangenkopfes (3) liegt,
**dadurch gekennzeichnet,**
- **dass** die Bohrstange/der Bohrstangenkopf (3) mit ihrem/seinem hinteren, dem Schneidwerkzeug (4) abgewandten Ende an dem vorderen Ende des Hohlprofils (5) als Wechselkopf lösbar befestigt ist, und
- **dass** die Reduzierhülse (2) oder die andere Werkzeugaufnahme und das Hohlprofil (5) über deren gesamte Länge von einer Spannschraube (10) koaxial durchdrungen sind, deren vorderes Ende mit einem Außengewinde (11) in einer Gewindebohrung (12) der Bohrstange/des Bohrstangenkopfes (3) einliegt.

2. Bohrstangenanordnung nach Anspruch 1, **dadurch gekennzeichnet, dass** die zylindrische Längsausnehmung (5a) des Hohlprofils (5) einen Innendurchmesser (D3) aufweist, der gleich oder größer ist als der Durchmesser der Spannschraube (10).

3. Bohrstangenanordnung nach Anspruch 1 oder 2, **dadurch gekennzeichnet, dass** die Länge der Bohrstange/des Bohrstangenkopfes (3) geringer ist als die Länge des Hohlprofils (5).

4. Bohrstangenanordnung nach einem der vorherigen Ansprüche, **dadurch gekennzeichnet, dass** die Bohrstange/der Bohrstangenkopf (3) mit ihrem/seinem hinteren Ende an dem Hohlprofil (5) klemmend insbesondere durch eine Fixierschraube (14) gehalten ist.

5. Bohrstangenanordnung nach einem der vorherigen Ansprüche, **dadurch gekennzeichnet, dass** die Gewindebohrung (12) der Bohrstange/des Bohrstangenkopfes (3) von einer zylindrischen Wand (15) umgeben ist, die in einer Bohrung (13) des vorderen Endes des Hohlprofils (5) insbesondere formschlüssig einliegt.

6. Bohrstangenanordnung nach Anspruch 5, **dadurch gekennzeichnet, dass** die Achse der zylindrischen Wand (15) und die Achse der Bohrstange/des Bohrstangenkopfes (3) gleichachsig sind oder zueinander parallel miteinander einen Abstand bilden.

7. Bohrstangenanordnung nach einem der vorherigen Ansprüche, **dadurch gekennzeichnet, dass** die Achse der Bohrstange/des Bohrstangenkopfes (3) und die Achse der Reduzierhülse/Werkzeugaufnahme zueinander parallel miteinander einen Abstand bilden.

8. Bohrstangenanordnung nach einem der vorherigen Ansprüche, **dadurch gekennzeichnet, dass** die Außenwand (5c) des stabilisierenden Hohlprofils (5) zylindrisch ist mit einem kreisförmigen oder ovalen Querschnitt.

9. Bohrstangenanordnung nach einem der vorherigen Ansprüche, **dadurch gekennzeichnet, dass** die Außenwand (5c) des stabilisierenden Hohlprofils (5) einen Querschnitt mit Abflachungen (5e) aufweist.

10. Bohrstangenanordnung nach einem der vorherigen Ansprüche, **dadurch gekennzeichnet, dass** die Hohlprofilwand (5b) im Bereich ihrer geringsten Dicke (D1) ½ bis 1/30 der Dicke aufweist, die die Hohlprofilwand im Bereich ihrer größten Dicke (D2) aufweist.

11. Bohrstangenanordnung nach einem der vorherigen Ansprüche, **dadurch gekennzeichnet, dass** das stabilisierende Hohlprofil (5) an der vorderen Stirnseite der Reduzierhülse (2) oder andere Werkzeugaufnahme angeformt ist.

12. Bohrstangenanordnung nach einem der Ansprüche 1 bis 10, **dadurch gekennzeichnet, dass** das stabilisierende Hohlprofil (5) in einer Längsausnehmung der Reduzierhülse (2) insbesondere längsverstellbar einliegt und fixiert ist.

## Claims

1. Boring bar arrangement with a boring bar/boring bar head (3) and a fastening apparatus (1) for fastening the boring bar/boring bar head (3) to a shaping machine with a cylindrical reducing sleeve (2) or another tool holder which can be fastened in the machine chuck and the front end, facing away from the machine chuck, a hollow profile (5) projects which supports the boring bar/boring bar head (3),
- an end region of the boring bar/boring bar head (3) supporting a cutting tool (4),
- the wall (5b), situated between the hollow profile interior space (5a) and the hollow profile outer wall, of the hollow profile (5) which stabilizes the bring bar/boring bar head (3) having a lower thickness (D1) in the apparatus side region, on which the cutting tool (4) on the boring bar/boring bar head (3) projects, than the thickness (D2) of the remaining wall (5b) of the hollow profile (5), and
- the longitudinal axis (L1) of the hollow profile (5) lying axially parallel to and at a spacing (A) from the axis (L2) of the reducing sleeve (2) or the other tool holder and the boring bar/boring bar head (3),
**characterized**
- **in that** the boring bar/boring bar head (3) is fastened releasably by way of its rear end which faces the cutting tool (4) to the front end of the hollow profile (5) as a replaceable head, and
- **in that** the reducing sleeve (2) or the other tool holder and the hollow profile (5) are penetrated coaxially over their entire length by a clamping bolt (10), the front end of which lies with an external thread (11) in a threaded bore (12) of the boring bar/boring bar head (3).

2. Boring bar arrangement according to Claim 1, **characterized in that** the cylindrical longitudinal recess (5a) of the hollow profile (5) has an internal diameter (D3) which is greater than or equal to the diameter of the clamping bolt (10).

3. Boring bar arrangement according to Claim 1 or 2, **characterized in that** the length of the boring bar/boring bar head (3) is smaller than the length of the hollow profile (5).

4. Boring bar arrangement according to one of the preceding claims, **characterized in that** the boring bar/boring bar head (3) is held by way of its rear end on the hollow profile (5) in a clamping manner, in particular by a fixing screw (14).

5. Boring bar arrangement according to one of the preceding claims, **characterized in that** the threaded bore (12) of the boring bar/boring bar head (3) is surrounded by a cylindrical wall (15) which lies, in particular in a positively locking manner, in a bore (13) of the front end of the hollow profile (5).

6. Boring bar arrangement according to Claim 5, **characterized in that** the axis of the cylindrical wall (15) and the axis of the boring bar/boring bar head (3) are coaxial or, parallel to one another, form a spacing with one another.

7. Boring bar arrangement according to one of the preceding claims, **characterized in that**, parallel to one another, the axis of the boring bar/boring bar head (3) and the axis of the reducing sleeve/tool holder form a spacing with one another.

8. Boring bar arrangement according to one of the preceding claims, **characterized in that** the outer wall (5c) of the stabilizing hollow profile (5) is cylindrical with a circular or oval cross section.

9. Boring bar arrangement according to one of the preceding claims, **characterized in that** the outer wall (5c) of the stabilizing hollow profile (5) has a cross section with flattened portions (5e).

10. Boring bar arrangement according to one of the preceding claims, **characterized in that** the hollow profile wall (5b) has, in the region of its smallest thickness (D1), from 1/2 to 1/30 of the thickness which the hollow profile wall has in the region of its greatest thickness (D2).

11. Boring bar arrangement according to one of the preceding claims, **characterized in that** the stabilizing hollow profile (5) is formed on the front end side of the stabilizing sleeve (2) or other tool holder.

12. Boring bar arrangement according to one of Claims 1 to 10, **characterized in that** the stabilizing hollow profile (5) lies and is fixed, in particular in a length-adjustable manner, in a longitudinal recess of the reducing sleeve (2).

## Revendications

1. Agencement de barre d'alésage avec une barre d'alésage/une tête de barre d'alésage (3) et un dispositif de fixation (1) pour fixer la barre d'alésage/la tête de barre d'alésage (3) sur une machine d'usinage par enlèvement de copeaux avec une douille de réduction cylindrique (2) ou un autre logement d'outil pouvant être fixé dans le mandrin de la machine, à l'extrémité avant duquel, détournée du mandrin de la machine, fait saillie un profilé creux (5) qui porte la barre d'alésage/la tête de barre d'alésage (3),
- une zone d'extrémité de la barre d'alésage/de la tête de barre d'alésage (3) portant un outil de coupe (4),
- la paroi (5b) du profilé creux (5) stabilisant la barre d'alésage/la tête de barre d'alésage(3), se trouvant entre l'espace intérieur de profilé creux (5a) et la paroi extérieure de profilé creux, présentant une épaisseur (D1) inférieure dans la zone latérale du dispositif où l'outil de coupe (4) fait saillie sur la barre d'alésage/la tête de barre d'alésage (3) que l'épaisseur (D2) du reste de la paroi (5b) du profilé creux (5), et
- l'axe longitudinal (L1) du profilé creux (5) étant situé en parallélisme axial avec et à une distance (A) de l'axe (L2) de la douille de réduction (2) ou de l'autre logement d'outil et de la barre d'alésage/de la tête de barre d'alésage (3),
**caractérisé en ce que**
- la barre d'alésage/la tête de barre d'alésage (3) est fixée de manière amovible par son extrémité arrière, détournée de l'outil de coupe (4), à l'extrémité avant du profilé creux (5) en tant que tête interchangeable, et
- la douille de réduction (2) ou l'autre logement d'outil et le profilé creux (5) sont traversés coaxialement sur toute leur longueur par une vis de serrage (10) dont l'extrémité avant est insérée par un filetage extérieur (11) dans un alésage fileté (12) de la barre d'alésage/tête de barre d'alésage (3).

2. Agencement de barre d'alésage selon la revendication 1, **caractérisé en ce que** l'évidement longitudinal cylindrique (5a) du profilé creux (5) présente un diamètre intérieur (D3) qui est égal ou supérieur au diamètre de la vis de serrage (10).

3. Agencement de barre d'alésage selon la revendication 1 ou 2, **caractérisé en ce que** la longueur de la barre d'alésage/de la tête de barre d'alésage (3) est inférieure à la longueur du profilé creux (5).

4. Agencement de barre d'alésage selon l'une quelconque des revendications précédentes, **caractérisé en ce que** la barre d'alésage/la tête de barre d'alésage (3) est maintenue par son extrémité arrière sur le profilé creux (5) en étant serrée, notamment par une vis de fixation (14) .

5. Agencement de barre d'alésage selon l'une quelconque des revendications précédentes, **caractérisé en ce que** l'alésage fileté (12) de la barre d'alésage/de la tête de barre d'alésage (3) est entouré par une paroi cylindrique (15) qui est insérée, notamment par complémentarité de forme, dans un alésage (13) de l'extrémité avant du profilé creux (5).

6. Agencement de barre d'alésage selon la revendication 5, **caractérisé en ce que** l'axe de la paroi cylindrique (15) et l'axe de la barre d'alésage/de la tête de barre d'alésage (3) sont coaxiaux ou forment une distance l'un avec l'autre parallèlement l'un à l'autre.

7. Agencement de barre d'alésage selon l'une quelconque des revendications précédentes, **caractérisé en ce que** l'axe de la barre d'alésage/de la tête de barre d'alésage (3) et l'axe de la douille de réduction/logement d'outil forment une distance l'un avec l'autre parallèlement l'un à l'autre.

8. Agencement de barre d'alésage selon l'une quelconque des revendications précédentes, **caractérisé en ce que** la paroi extérieure (5c) du profilé creux stabilisateur (5) est cylindrique avec une section transversale circulaire ou ovale.

9. Agencement de barre d'alésage selon l'une quelconque des revendications précédentes, **caractérisé en ce que** la paroi extérieure (5c) du profilé creux stabilisateur (5) présente une section transversale avec des aplatissements (5e) .

10. Agencement de barre d'alésage selon l'une quelconque des revendications précédentes, **caractérisé en ce que** la paroi de profilé creux (5b) présente, dans la zone de sa plus faible épaisseur (D1), de ½ à 1/30 de l'épaisseur que présente la paroi de profilé creux dans la zone de sa plus grande épaisseur (D2).

11. Agencement de barre d'alésage selon l'une quelconque des revendications précédentes, **caractérisé en ce que** le profilé creux stabilisateur (5) est formé sur le côté frontal avant de la douille de réduction (2) ou de l'autre logement d'outil.

12. Agencement de barre d'alésage selon l'une quelconque des revendications 1 à 10, **caractérisé en ce que** le profilé creux stabilisateur (5) est inséré et fixé dans un évidement longitudinal de la douille de réduction (2), notamment de manière réglable longitudinalement.
